(19) Europäisches Patentamt
European Patent Office
Office européen des brevets

(11) **EP 1 627 156 B1**

(12) **EUROPEAN PATENT SPECIFICATION**

(45) Date of publication and mention of the grant of the patent:
**28.10.2009 Bulletin 2009/44**

(21) Application number: **04734408.0**

(22) Date of filing: **21.05.2004**

(51) Int Cl.:
*F16C 19/52* (2006.01)  *F16C 33/41* (2006.01)
*G01P 3/44* (2006.01)  *F16C 19/18* (2006.01)

(86) International application number:
**PCT/JP2004/007303**

(87) International publication number:
**WO 2004/113746 (29.12.2004 Gazette 2004/53)**

(54) **ROTARY DEVICE WITH SENSOR AND METHOD FOR FORMING APPARATUS FOR MEASURING LOAD ON ROLLING BEARING UNIT**

ROTIERENDE VORRICHTUNG MIT SENSOR UND VERFAHREN ZUR HERSTELLUNG EINES APPARATES ZUR MESSUNG DER BELASTUNG IN EINER WÄLZLAGEREINHEIT

DISPOSITIF ROTATIF MUNI D'UN CAPTEUR ET PROCEDE DE FACONNAGE D'UN APPAREIL DESTINE A MESURER UNE CHARGE SUR UNE UNITE A ROULEMENT A GALETS

(84) Designated Contracting States:
**DE FR GB**

(30) Priority: **28.05.2003 JP 2003151004
17.09.2003 JP 2003324001
19.09.2003 JP 2003328491**

(43) Date of publication of application:
**22.02.2006 Bulletin 2006/08**

(73) Proprietor: **NSK Ltd.
Tokyo 141-8560 (JP)**

(72) Inventors:
• **AOKI, Mamoru c/o NSK Ltd.
Fujisawa-shi, Kanagawa 251-8501 (JP)**
• **ONO, Koichiro c/o NSK Ltd.
Fujisawa-shi, Kanagawa 251-8501 (JP)**
• **YANAGISAWA, Tomoyuki c/o NSK Ltd.
Fujisawa-shi, Kanagawa 251-8501 (JP)**

(74) Representative: **Grünecker, Kinkeldey,
Stockmair & Schwanhäusser
Anwaltssozietät
Leopoldstrasse 4
80802 München (DE)**

(56) References cited:
**DE-A- 10 105 824  FR-A- 2 558 223
GB-A- 2 382 142  US-A- 5 026 178
US-A- 5 898 388**

• **PATENT ABSTRACTS OF JAPAN vol. 0124, no. 45 (M-767), 22 November 1988 (1988-11-22) & JP 63 176761 A (KOYO SEIKO CO LTD), 21 July 1988 (1988-07-21)**

EP 1 627 156 B1

**Description**

**Technical Field**

The present invention relates to a rotary device with a sensor capable of measuring the rotary speed of the retainer of the bearing used in a rotary device to detect the rotary speed of the rotary shaft or estimate the load on the bearing and a method for forming the rotary device.

Further, the apparatus for measuring the load on a rolling bearing unit according to the invention concerns improvements in rolling bearing unit for bearing the wheel of a moving body such as automobile, railroad vehicle and transporting vehicle and is used to measure the load on the rolling bearing unit (either or both of radial load and axial load) for the purpose of securing the stability in the trip of the moving body.

Such a rotary device is known from GB 2 382 142 A.

**Background Art**

Heretofore, a rotary device for detecting the rotary speed of the rotary shaft born by a bearing has normally had a magnetic encoder mounted on the rotary portion of the bearing and a magnetism sensor disposed opposed to the former magnetic encoder to measure the rotary speed according to the change of magnetism by way of example.

In recent years, it has been widely practiced to incorporate a rotary speed sensor in a bearing for bearing the rotary shaft. In order to incorporate the rotary speed sensor in the bearing, it has been normally practiced to fix a magnet having a multipolar magnetization to one end of the rotary ring (e.g., inner ring) of the bearing and fix a magnetism sensor to one end of the fixed ring (e.g., outer ring) opposed to the magnet.

Another method is disclosed in JP-A-2001-033469. This method involves the disposition of a magnet and a magnetism sensor on the respective side of rolling elements. In this arrangement, the passing velocity of the rolling elements is detected. The rotary speed of the rotary device is measured on the basis of the velocity.

However, among the aforementioned related art rotary devices with sensor, the rotary device with sensor disclosed in JP-A-2001-033469 is disadvantageous in that the mounting of the magnetism sensor on the rotary device requires the provision of a magnetic encoder or sensor and a member for fixing it, making it difficult to reduce the size of the apparatus. Further, the method involving the measurement of the velocity of rolling elements is disadvantageous in that the resolution of measurement is limited by the number of rolling elements.

An example of the rotary speed detecting device which can be reduced in its size is one having such an arrangement that only specific ones of the plurality of rolling elements retained in the retainer are magnetized and a magnetism sensor such as hall element is provided opposed to these magnetized rolling elements so that the voltage change according to the change of magnetic field with the revolution of the rolling elements is detected by the hall element.

However, the aforementioned rotary speed detecting device is disadvantageous in that the direction of the magnetic pole of the magnetized rolling elements is not always toward the hall element, making it impossible for the hall element to change in its magnetic flux and detect the passage of the magnetized rolling elements when the sensitive surface of the hall element and the direction of the magnetic flux are parallel to each other. As a result, the accuracy of measurement is deteriorated.

For example, the wheel of an automobile is rotationally born by a suspension with a double row angular rolling bearing unit. In order to secure desired running stability of the automobile, a vehicle running stabilizer such as antilock brake system (ABS), traction control system (TCS) and vehicle stability control system (VSC) is used. In order to control such a vehicle running stabilizer, signals indicating the rotary speedof the wheel and acceleration in various directions applied to the car body, etc. are needed. Further, in order to make higher control, it is occasionally preferred to know the magnitude of the load (either or both of radial load and axial load) applied to the rolling bearing unit via the wheel.

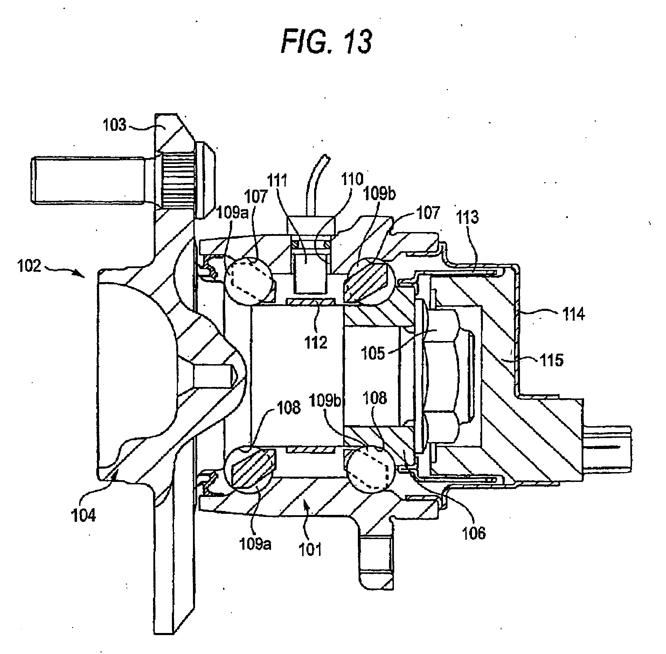

Under these circumstances, JP-A-2001-21577 discloses a rolling bearing unit with load measuring device capable of measuring the radial load. A first example of the related art rolling bearing unit with load measuring device is adapted to measure the radial load and has the arrangement shown in Fig. 13. A hub 102 which is a rotary ring as well as a member corresponding to inner ring is born by the inner surface of an outer ring 101 which is a stationary ring as well as a member corresponding to outer ring and is born by the suspension. The hub 102 comprises a hub main body 104 having a rotary side flange 103 for fixing the wheel provided at the outer end thereof (crosswise outer end of the hub main body 104 mounted on the vehicle) and an inner ring fitted on the inner end of the hub main body 104 (crosswise center of the hub main body 104 mounted on the vehicle) and pressed by the nut 105. A plurality of rolling elements 109a, 109b are disposed between double row outer ring races 107, 107 formed as stationary ring race on the inner surface of the outer ring 101 and double row inner ring races 108, 108 formed as rotary side race on the outer surface of the hub 102 so that the hub 102 can be rotated inside the outer ring 101.

A mounting hole 110 piercing radially through the outer ring 101 is formed substantially perpendicular to the upper end of the outer ring 101 between the double row outer ring races 107, 107 at the axially middle portion of the outer ring 101. A round rod-shaped displacement sensor 111 which is a load measuring sensor is mounted on the outer ring 101 in the mounting hole 110. The displacement sensor 111 is of noncontact type. The detecting surface provided on the forward end (lower end) of the displacement sensor 111 is disposed opposed and close to the outer surface of a sensor ring 112 fitted on the axially middle portion of the hub 102. The displacement sensor 111 outputs a signal according to the change of the distance between the detecting surface and the outer surface of the sensor ring 112.

The related art rolling bearing unit with load measuring device having the aforementioned arrangement can determine the load on the rolling bearing unit according to the detection signal from the displacement sensor 111. In some detail, the hub 102 bearing the wheel stays at the current position while the outer ring 101 born by the suspension of the vehicle is pressed downward due to the weight of the vehicle. Therefore, as the weight of the vehicle increases, the deviation of the center of the outer ring 101 from the center of the hub 102 increases due to the elastic deformation of the outer ring 101, the hub 102 and the rolling elements 109a, 109b. Further, as the weight of the vehicle increases, the distance between the detecting surface of the displacement sensor 111 provided on the upper end of the outer ring 101 and the outer surface of the sensor ring 112 decreases. Therefore, by feeding the detection signal from the displacement sensor 111 to the controller, the radial load on the rolling bearing unit having the displacement sensor 111 incorporated therein can be determined according to a relationship or map previously established experimentally or otherwise. On the basis of the load on the rolling bearing units thus determined, ABS is properly controlled. In addition, the operator is informed of the fact that the vehicle is abnormally loaded.

The related art structure shown in Fig. 13 is capable of detecting the load on the rolling bearing unit as well as the rotary speed of the hub 102. To this end, a sensor rotor 113 is fitted on the inner endof the inner ring 106. In addition, a rotary speed detecting sensor 115 is born by a cover 114 mounted on the inner opening of the outer ring 101. Further, the detecting portion of the rotary speed detecting sensor 115 is disposed opposed to the area to be detected on the sensor rotor 113 with a measurement gap interposed therebetween.

During the operation of the rolling bearing unit having the aforementioned rotary speed detecting device incorporated therein, the sensor rotor 113 rotates with the hub 102 to which the wheel is fixed. When the area to be detected on the sensor rotor 113 runs in the vicinity of the detecting portion of the rotary speed detecting sensor 115, the output of the rotary speed detecting sensor 115 changes. Thus, the frequency indicating the change of the output of the rotary speed detecting sensor 115 is proportional to the rotary speed of the wheel. Accordingly, by feeding the output signal from the rotary speed detecting sensor 115 to a controller which is not shown, ABS or TCS can be properly controlled.

The first example of the rolling bearing unit with load measuring device having the aforementioned related art structure is adapted to measure the radial load on the rolling bearing unit. The structure for measuring the axial load on the rolling bearing unit, too, is disclosed in JP-A-3-209016, etc. and has been heretofore known. Fig. 14 illustrates the rolling bearing unit with load measuring device for measuring the axial load disclosed in JP-A-3-209016. In the second example of the related art structure, a rotary side flange 103a for bearing the wheel is fixed to the outer surface of the outer end of the hub 102a which is a rotary ring as well as a member corresponding to inner ring. Further, a fixed side flange 117 for bearing the outer ring 101a which is a stationary ring as well as a member corresponding to outer ring on a knuckle 116 constituting the suspension is fixed to the outer surface of the outer ring 101a. Moreover, a plurality of rolling elements 109a, 109b are rollably provided between double row outer ring races 107, 107 formed on the inner surface of the outer ring 101a and double row inner ring races 108, 108 formed on the outer surface of the hub 102a so that the hub 102a is rotationally born by the inner side of the outer ring 101a.

Further, a load sensor 120 is attached to the area surrounding a threadedhole 119 in which a bolt 118 for connecting the fixed side flange 117 to the knuckle 116 is threaded at a plurality of positions on the inner surface of the fixed side flange 117. These load sensors 120 are each clamped between the outer surface of the knuckle 116 and the inner surface of the fixed side flange 117 with the outer ring 101a born by the knuckle 116.

In the case of the second example of the load measuring device of the rolling bearing unit having the aforementioned related art structure, when some axial load is applied between a wheel which is not shown and the knuckle 116, the outer surface of the knuckle 116 and the inner surface of the fixed side flange 117 press strongly the load sensors 120 from the respective side thereof. Accordingly, by summing the measurements given by the load sensors 120, the axial load applied between the wheel and the knuckle 116 can be determined. Though not shown, JP-B-62-3365 discloses a method for determining the revolving speed of rolling elements from the vibration frequency of a member corresponding to outer ring part of which has a reduced rigidity and measuring the axial load applied on the rolling bearing.

In the case of the first example of the related art structure shown in Fig. 13, the radial displacement of the outer ring 101 and the hub 102 relative to each other is measured by the displacement sensor 111 to measure the load applied on the rolling bearing unit. However, since the radial displacement is slight, it is necessary that as the displacement sensor 111 there be used one having a high precision to determine the radial load accurately. Since such a noncontact sensor having a high precision is expensive, it unavoidably adds to the total cost of the rolling bearing unit with load measuring device.

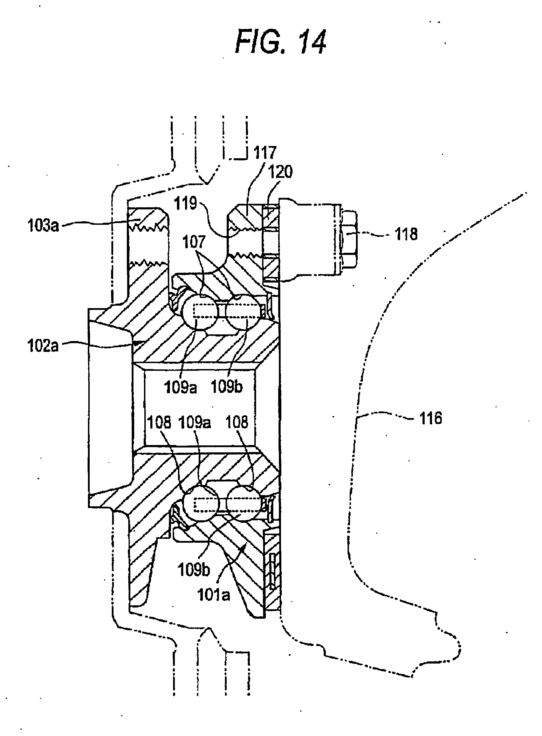

Further, in the case of the second example of the related art structure shown in Fig. 14, it is necessary that the load sensors 120 be provided by the same number as that of the bolts 118 forbearing the outer ring 101a on the knuckle 116. Therefore, combined with the expensiveness of the load sensor 120 itself, the total cost of the loadmeasuring device of the rollingbearing unit increases unavoidably. Moreover, the method disclosed in JP-B-62-3365 requires that part of the member corresponding to outer ring have a reduced rigidity, possibly making it difficult to provide the member corresponding to outer ring with a desired durability.

Under these circumstances, the inventors early worked out an invention concerning a rolling bearing unit loadmeasuring device for measuring the radial load or axial load applied to a rolling bearing unit which is a double row angular ball bearing on the basis of the revolving speed of a pair of lines of rolling elements (balls) constituting the rolling bearing unit (Japanese Patent Application Nos. 2003-171715 and 2003-172483). In the case where the rolling bearing unit load measuring device according to the related art invention is implemented, in order to determine the revolving speed of the lines of rolling elements, it is effective from the standpoint of resolution of determination of revolving speed to detect the rotary speed of the retainer retaining the lines of rolling elements. In this case, it is necessary that a revolving speed detecting encoder be born by the retainer. It is also preferred that as such a revolving speed detecting encoder there be used a rubber or plastic magnet having a powdered or microfibrous ferromagnetic material incorporated in a rubber or synthetic resin. The use of such a rubber magnet or plastic magnet makes it possible to reduce the cost of the device and detect the revolving speed with a high resolution and an assured reliability.

However, in the case where the retainers each comprise a rubber magnet or plastic magnet provided thereon as a revolving speed detecting encoder to determine the revolving speed of the lines of rolling elements, it is necessary that consideration be made to prevent the powdered or microfibrous ferromagnetic material from being separated from the rubber magnet or plastic magnet. In other words, the area to be detected on the revolving speed detecting encoder and the detecting portion of the revolving speed detecting sensor are disposed opposed close to each other with a measurement gap of from about 0.5 to 2 mm interposed there between. On the other hand, provided between the inner surface of a pocket provided in the retainers and the rolling surface of the rolling elements is a pocket gap for allowing the rolling of the rolling elements as well as the attachment of required grease to the rolling surface of the rolling elements. Thus, it is likely that the retainers can make displacement by the amount corresponding to the pocket gap, causing the loss of the measurement gap.

When the measurement gap is lost to cause the area to be detected on the revolving speed detecting encoder and the detecting portion of the revolving speed detecting sensor or other members disposed adjacent to the retainer to come in (sliding) contact with each other, the powdered or microfibrous material exposed on the area to be detected can be exfoliated. Since the powdered or microfibrous material is made of a ferromagnetic material having a high hardness such as ferrite and iron, it can damage the rolling contact area of the rolling surface of the rolling elements with the outer ring race and the inner ring race when exfoliated to contaminate the grease. As a result, the durability of the rolling bearing unit comprising the load measuring device incorporated therein can be impaired (rolling fatigue life can be reduced). Further, the contamination of the grease by the powdered or microfibrous material may cause the deterioration of the detecting precision of the revolving speed detecting sensor.

An aim of the invention is to eliminate the aforementioned shortcoming of the related art and provide a rotary device with sensor having a high resolution which can be reduced in its size and a method for forming the rotary device with sensor.

In the light of the aforementioned circumstances, the invention realizes an apparatus for measuring the load on a rolling bearing unit which can provide a rolling bearing unit with desired durability and precision in load measurement by preventing the exfoliation of powdered or microfibrous ferromagnetic material from the area to be detected on a rubber magnet or plastic magnet used as a revolving speed detecting encoder.

In the light of the aforementioned circumstances, the invention realizes an apparatus for measuring the load on a rolling bearing unit which can be arranged at a low cost without causing any problem of durability or installation space and can measure the load applied to a rolling bearing unit.

## Disclosure of the Invention

In order to solve the aforementioned problems, the invention concerns a rotary device according to claim 1. The invention also concerns a manufacturing method of a rotary device according to claims 4 and 5.

Further, the aforementioned annular magnet having a multipolar magnetization is formed by a plastic magnet.

The aforementioned arrangement such that the retainer has an annular magnet mounted on the side thereof contributes to the reduction of the size of the apparatus as compared with the arrangement such that the annular magnet is disposed on other areas of the bearing.

Moreover, since the retainer has a back yoke-forming member and a multipolar annular magnet provided thereon, the density of magnetic flux toward the magnetism sensor is raised, making it possible to provide a relatively greater air gap between the annular magnet and the sensor and hence a greater tolerance in production while performing the back yoke function of the annular member to reduce the leakage of magnetism.

Further, since the multipolar annular magnet is formed by a plastic magnet, the retainer is not subject to vibration such as whirling caused by unbalance due to the weight of magnet.

The rotary speed of the retainer changes with the load on the bearing. For example, when the axial load on the bearing increases, the contact angle of the rolling elements of the bearing with the bearing ring increases, resulting in the rise of the revolving speed of the rolling elements and hence the rotary speed of the retainer.

Accordingly, by measuring the rotary speed of the retainer, the load on the bearing can be estimated.

All the apparatus for measuring the load on a rolling bearing unit of the invention comprise a stationary ring, a rotary ring, a plurality of rolling elements, a pair of retainers, a pair of revolving speed detecting encoders, a pair of revolving speed detecting sensors, and an arithmetic logical unit.

Among these members, the stationary ring does not rotate even during operation.

The aforementioned rotary ring is disposed concentrically with the stationary ring and rotates during operation.

The plurality of rolling elements are rollably disposed between a pair of stationary side races and rotary side races respectively formed on the opposing area of the stationary ring and the rotary ring in such an arrangement that the pair of lines of rolling elements have opposite directions of contact angle.

The retainers each are provided between the stationary ring and the rotary ring and rotate with the revolution of the rolling elements retained in a plurality of pockets provided in each of the retainers.

The pair of revolving speed detecting encoder each are born by the retainers, rotate with the retainers and have properties that change alternately along the circumferential direction.

The pair of revolving speed detecting sensors each are born by the retainers and have the respective detection portion opposed to the area to be detected on the revolving speed detecting encoders to detect the revolving speed of the lines of rolling elements, respectively.

Further, the arithmetic logical unit calculates the load between the stationary ring and the rotary ring on the basis of a detection signal fed by the revolving speed detecting sensors.

Moreover, the revolving speed detecting encoders each comprise an annular rubber magnet or plastic magnet having S poles and N poles disposed alternately on one axial side thereof and the area to be detected which is one axial side of the rubber magnet or plastic magnet is disposed opposed close to the revolving speed detecting sensors.

Thus, the apparatus for measuring the load on a rolling bearing unit according to the invention is arranged such that when the retainers make displacement toward the area to be detected, a part of the retainers come in contact with other members disposed adjacent to the retainers to prevent the area to be detected from rubbing against the other members.

Further, the apparatus for measuring the load on a rolling bearing unit according to the invention is arranged such that the area to be detected can be covered by a protective film to prevent the area to be detected from rubbing directly against other members disposed adjacent to the retainers.

The apparatus for measuring the load on a rolling bearing unit according to the invention having the aforementioned arrangement can measure the load on the rolling bearing unit by detecting the revolving speed of each of a pair of lines of rolling elements having different contact angles. In other words, when a load is applied to a rolling bearing unit such as double row angular balling bearing, the contact angle of the rolling elements (balls) changes, causing the change of the revolving speed of the rolling elements. Therefore, by detecting the revolving speed of the rolling elements as rotary speed of the retainer, the load between the stationary ring and the outer ring can be determined.

Further, in accordance with the apparatus for measuring the load on a rolling bearing unit according to the invention, the area to be detected on the rubber magnet or plastic magnet used as a revolving speed detecting encoder can be prevented from rubbing against other members. Thus, the falling of powdered or microfibrous ferromagnetic material from the area to be detected can be prevented, making it possible to secure the desired durability of the rolling bearing unit and the desired detection accuracy in measurement of load.

All the apparatus for measuring the load on a rolling bearing unit of the invention comprise a stationary ring, a rotary ring, a plurality of rolling elements, a pair of retainers, a pair of revolving speed detecting encoders, a pair of revolving speed detecting sensors, and an arithmetic logical unit.

Among these members, the stationary ring does not rotate even during operation.

The aforementioned rotary ring is disposed concentrically with the stationary ring and rotates during operation.

The plurality of rolling elements are rollably disposed between a pair of stationary side races and rotary side races respectively formed on the opposing area of the stationary ring and the rotary ring in such an arrangement that the pair of lines of rolling elements have opposite directions of contact angle.

The retainers each are provided between the stationary ring and the rotary ring and rotate with the revolution of the rolling elements retained in a plurality of pockets provided in each of the retainers.

The pair of revolving speed detecting encoder each are born by the retainers, rotate with the retainers and have properties that change alternately along the circumferential direction.

The pair of revolving speed detecting sensors each are born by the retainers and have the respective detection portion opposed to the area to be detected on the revolving speed detecting encoders to detect the revolving speed of the lines of rolling elements, respectively.

Further, the arithmetic logical unit calculates the load between the stationary ring and the rotary ring on the basis of a detection signal fed by the revolving speed detecting sensors.

Moreover, in the apparatus for measuring the load on a rolling bearing unit according to the invention, the revolving speed detecting encoders each comprise an annular permanent magnet having S poles and N poles disposed alternately on one axial side thereof. Further, the revolving speed detecting encoders each are inserted during the injection molding of the retainers so that they are bonded and fixed to one axial side of the retainers.

Moreover, in the apparatus for measuring the load on a rolling bearing unit according to the invention, the revolving speed detecting encoders each comprise an annular permanent magnet having S poles and N poles disposed alternately on the other axial side thereof. The revolving speed detecting encoders each are inserted in an indentation formed during the injection molding of the retainers so that they are bonded and fixed to one axial end of the retainers.

Further, in the apparatus for measuring the load on a rolling bearing unit according to the invention, the revolving speed detecting encoders each are an annular rubber magnet or plastic magnet having S poles and N poles disposed alternately on the other axial side thereof. The revolving speed detecting encoders each are injection-molded in an indentation formed during the injection molding of the retainers so that they are bonded and fixed to one axial end of the retainers.

Moreover, the revolving speed detecting encoders each are an annular plastic magnet or plastic magnet having S poles and N poles disposed alternately on the other axial side thereof. The revolving speed detecting encoders each comprise a powdered or microfibrous magnetic material incorporated in the same synthetic resin as that constituting the retainers. The revolving speed detecting encoders each are injection-molded on one axial end of the retainers at the same time with the injection molding of the retainers so that they are bonded and fixed to one axial end of the retainers.

The apparatus for measuring the load on a rolling bearing unit according to the invention having the aforementioned arrangement can measure the load on the rolling bearing unit by detecting the revolving speed of each of a pair of lines of rolling elements having different contact angles. In other words, when a load is applied to a rolling bearing unit such as double row angular balling bearing, the contact angle of the rolling elements (balls) changes, causing the change of the revolving speed of the rolling elements. Therefore, by detecting the revolving speed of the rolling elements as rotary speed of the retainer, the load between the stationary ring and the outer ring can be determined.

Further, in accordance with the apparatus for measuring the load on a rolling bearing unit of the invention, the bond strength of the revolving speed detecting encoder with respect to the retainer can be enhanced, making it possible to prevent the encoder from being separated from the retainer and hence provide the load measuring apparatus with a sufficient reliability even after a prolonged use.

**Brief Description of the Drawings**

Fig. 1 is a sectional view of a rotary device with sensor illustrating Example 1 of the invention;

Fig. 2 is a perspective view of a crown retainer illustrating Example 2;

Fig. 3 is a diagram illustrating the positional relationship between the crown retainer and the sensor;

Fig. 4 is a sectional view illustrating Example 3 in which the invention is applied to a hub unit for wheel bearing;

Fig. 5 is a sectional view illustrating a structure on which the apparatus for measuring the load on a rolling bearing unit of the invention is based;

Fig. 6 is an enlarged view of the part A of Fig. 5;

Fig. 7 is a diagram as viewed from above the structure of Fig. 6 with the retainers, rolling elements, revolving speed detecting encoders and revolving speed detecting sensors removed;

Fig. 8 is a diagram of a rolling bearing unit for illustrating the reason why the load can be measured on the basis of rotary speed;

Fig. 9 is a partial sectional view of a retainer having a revolving speed detecting encoder connected thereto and a sensor unit illustrating Example 4 of the invention;

Figs. 10 (A) - (C) are partial sectional views illustrating three examples of displacement of the retainer;

Fig. 11 is a sectional view corresponding to the part B of Fig. 6 illustrating Example 5 of the invention;

Fig. 12 is a partial sectional view of a retainer having a revolving speed detecting encoder connected thereto illustrating a comparative Example 6 not according to the invention;

Fig. 13 is a sectional view of a rolling bearing unit having a sensor for measurement of radial load incorporated therein which has heretofore been known;

Fig. 14 is a sectional view of a rolling bearing unit having a sensor for measurement of axial load incorporated therein which has heretofore been known;

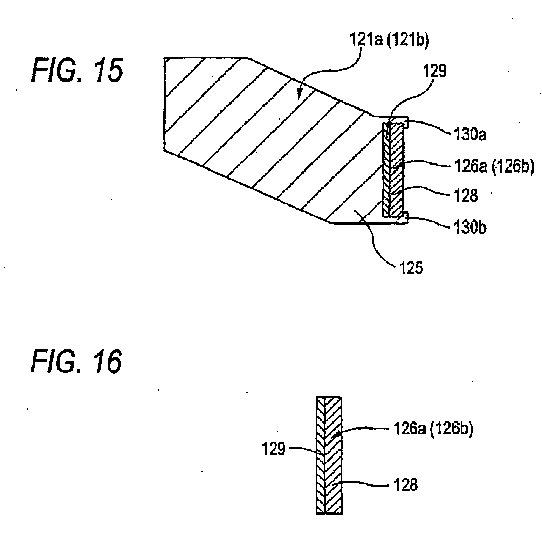

Fig. 15 is a partial sectional view of a retainer having a revolving speed detecting encoder connected thereto illustrating Example 4 of the invention;

Fig. 16 is a partial sectional view with the revolving speed detecting encoder removed;

Fig. 17 is a partial sectional view of a retainer having a revolving speed detecting encoder connected thereto illustrating Example 5 of the invention;

Fig. 18 is a partial sectional view with the revolving speed detecting encoder removed;

Fig. 19 is a partial sectional view of a retainer having a revolving speed detecting encoder connected thereto illustrating Example 6 of the invention;

Fig. 20 is a partial sectional view with the revolving speed detecting encoder removed;

Fig. 21 is a partial sectional view of a retainer having a revolving speed detecting encoder connected thereto illustrating a comparative Example 7 not according to the invention;

Fig. 22 is a partial sectional view illustrating only the retainer of Fig. 21; and

Fig. 23 is a partial sectional view illustrating how a retainer having a revolving speed detecting encoder is injection-molded in a comparative Example 8 not according to the invention.

In these drawings, the reference numeral 1 indicates a rotary shaft, the reference numerals 2, 3 each indicate a rolling bearing (ball bearing), the reference numerals 2a, 3a each indicate an outer ring, the reference numerals 2b, 3b each indicate an inner ring, the reference numeral 5 indicates a magnetism sensor, the reference numeral 6 indicates a retainer, the reference numeral 7 indicates a rolling element (ball), the reference numeral 8 indicates an annular magnet, the reference numeral 10 indicates a crown retainer, the reference numeral 11 indicates an annular member <annular steel sheet>, the reference numerals 111, 101a each indicate an outer ring, the reference numerals 112, 102a each indicate a hub, the reference numerals 113, 103a each indicate a rotary side flange, the reference numeral 114 indicates a hub main body, the reference numeral 115 indicates a nut, the reference numeral 116 indicates an inner ring, the reference numeral 117 indicates an outer ring race, the reference numeral 118 indicates an inner ring race, the reference numeral 119a, 109b each indicate a rolling element, the reference numerals 110, 110a each indicate a mounting hole, the reference numeral 111 indicates a displacement sensor, the reference numeral 112 indicates a sensor ring, the reference numeral 113 indicates a sensor rotor, the reference numeral 114 indicates a cover, the reference numerals 115, 115a each indicate a rotary speed detecting sensor, the reference numeral 116 indicates a knuckle, the reference numeral 117 indicates a fixing side flange, the referencenumeral 118 indicates a bolt, the reference numeral 119 indicates a threadedhole, the reference numeral 120 indicates a load sensor, the reference numerals 121a, 121b each indicate a retainer, the reference numerals 121a, 121b each indicate a retainer, the reference numeral 122 indicates a sensor unit, the reference numeral 123 indicates a detecting portion, the reference numerals 124a, 124b each indicate a revolving speed detecting sensor, the reference numerals 125, 125a each indicate a rim, the reference numerals 126a, 126b each indicate a revolving speed detecting encoder, the reference numeral 127 indicates a rotary speed detecting encoder, the reference numeral 128 indicates a rubber magnet, the reference numerals 129, 129a each indicate a back yoke, the reference numerals 130a, 130b each indicate a pressing portion, the reference numeral 131 indicates a protrusion, the reference numeral 132 indicates an indentation, and the reference numeral 133 indicates a protective film.

**Best Mode for Carrying Out the Invention**

Embodiments of implementation of the invention will be described in connection with the attached drawings.

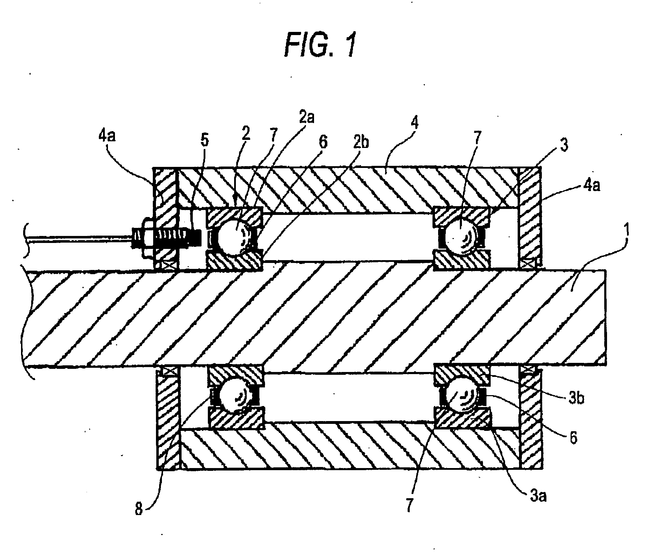

Fig. 1 is a sectional view of a rotary device with sensor illustrating Example 1 of the invention.

In Fig. 1, a rotary shaft 1 is born by a housing 4 via ball bearings 2, 3 which each are a rolling bearing. The housing 4 has a housing cover 4a fixed to the both ends thereof. The ball bearings 2, 3 are composed of outer rings 2a, 3a fitted in the housing 4, inner rings 2b, 3b fitted on the rotary shaft 1 and balls 7 clamped between the outer rings 2a, 3a and the inner rings 2b, 3b and rollably retained by the retainer 6, respectively. The retainer 6 of one ball bearing 2 is formed by a magnetic material and has annular magnet 8 having a multipolarmagnetization fixed to the side thereof. The housing cover 4a, which is disposed on the left side as viewed in the drawing, has a magnetism sensor 5 mounted on the position thereof opposed to the magnet 8 with a predetermined air gap interposed therebetween. The retainer 6 may be a crown retainer.

In this arrangement, when the rotation of the rotary shaft 1 and the inner rings 2b, 3b disposed integrally therewith is accompanied by the rotation of the retainer 6 that causes the N and S poles of the annular magnet 8 of the retainer 6 to cross the magnetism sensor 5 alternately, the number of revolutions of the retainer 6 is detected. From the results of detection is calculated the rotary speed of the shaft 1.

In the aforementioned arrangement such that the retainer 6 has the multipolar annular magnet 8 fixed thereto and the magnetism sensor 5 is disposed opposed to the multipolar annular magnet 8, the size of the apparatus can be reduced as compared with the arrangement such that the annular magnet 8 is disposed on other areas of the ball bearings 2, 3.

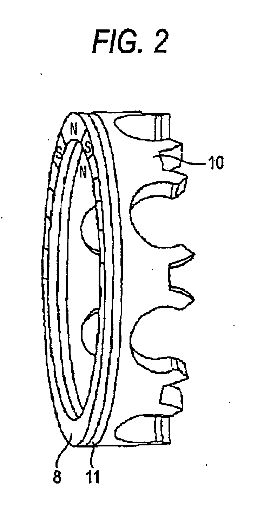

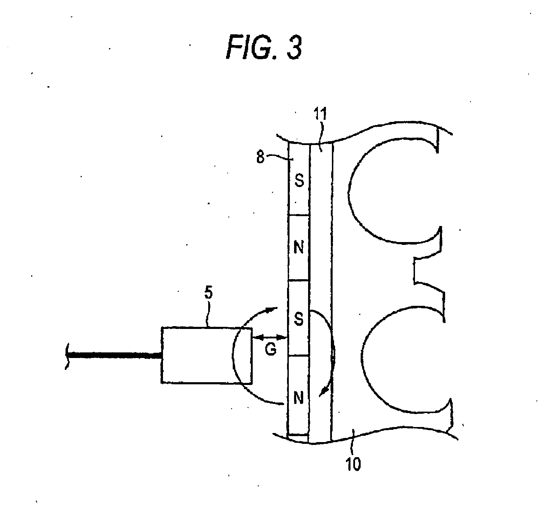

Fig. 2 is a perspective view of a crown retainer illustrating Example 2 of the invention and Fig. 3 is a diagram illustrating the positional relationship between the crown retainer and the sensor.

Fig. 2 has almost the same configuration as that of the rotary device shown in Fig. 1 and its entire configuration is not shown therefore. However, Fig. 2 is different from Fig. 1 in that a nonmagnetic crown retainer 10 is used. The crown retainer 10 is formed by a material obtained by reinforcing a resin such as polyamide with glass fiber. An annular steel sheet 11 which is an annular member formed by a magnetic material such as SPCC material, silicon steel sheet, martensite-based SUS and ferrite-based SUS is stuck to the bottom of the crown retainer 10. Further, the annular steel sheet 11 has an annular magnet 8 made of a plastic magnet having a multipolar magnetization stuck to the surface thereof. The retainer 10 does not necessarily need to be of crown type but may be of other types.

The magnetization of the annular magnet 8 may be conducted after being fixed to the annular steel sheet 11. Further, it is effective to insert-mold the retainer 10 and the annular steel sheet 11 made of magnetic material so that they are fixed. Moreover, it is effective to two-color mold the annular magnet 8 made of plastic magnet so that it is fixed.

In this arrangement, as shown in Fig. 3, the annular steel sheet 11 made of magnetic material acts as a back yoke for the annular magnet 8 to cause the magnetic flux to be oriented as indicated by the arrow, making it possible to enhance the density of magnetic flux toward the magnetism sensor 5 (see Fig. 1) and hence provide a relatively great air gap G between the magnetic 8 and the sensor 5. Thus, the tolerance in production can be raised, making it possible to provide a sufficient margin of precision in members and assembly. Further, the back yoke capacity of the annular steel sheet 11 eliminates leakage of magnetism, making it possible to prevent any adverse effects on other devices and mechanisms.

By forming the annular magnet 8 employed in Examples 1 and 2 by a light plastic magnet, the retainer can be rendered insusceptible to vibration such as whirling due to unbalance caused by the weight of the magnet 8.

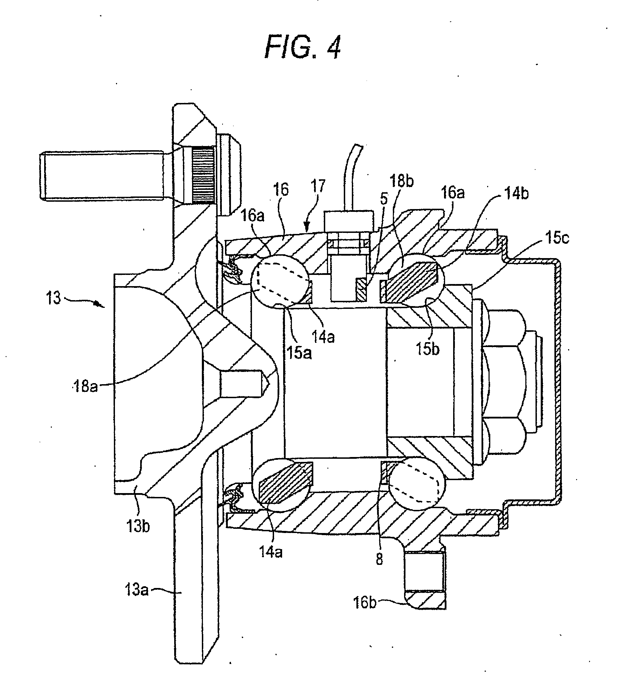

Fig. 4 is a sectional view illustrating Example 3 in which the invention is applied to a hub unit for wheel bearing.

While Example 1 comprises the magnetism sensor 5 disposed outside two lines of bearings 2, 3, Example 3 comprises the magnetism sensor 5 disposed between two lines of bearings (two retainers 14) as shown in Fig. 4.

In Fig. 4, the hub unit for wheel bearing is composed of a hub wheel 13 and an angular ball bearing 17. The hub wheel 13 has a radially outward flange 13a on which a wheel that is not shown is mounted and a hollow shaft 13b having a bearing fitting region rollably born by the angular ball bearing 17. The angular ball bearing 17 is of a double row outward type and comprises an inner ring formed by an inner ring race 15a directly formed on the hollow shaft 13b and a inner ring element 15c fitted on the small diameter periphery of the hollow shaft 13b having an inner race 15b, a single outer ring 16 having two lines of races 16a, 16b opposed to the inner ring races 15a, 15b, a plurality of balls 18a, 18b disposed interposed between the opposing races of the inner and outer rings, and two crown retainers 14a, 14b rollably retaining the balls 18a, 18b. On the periphery of the outer ring 16 is a radially outward flange 16b which is mounted on a suspension.

The retainer 14b on the inner ring element 15c side has a multipolar annular magnet 8 mounted on the side thereof. A magnetism sensor 5 is fixed to the outer ring 16 opposed to the annular magnet 8 with a predetermined air gap interposed therebetween.

In the aforementioned arrangement such that the annular magnet 8 is disposed on the side of the retainer 14b and between the retainers 14a and 14b and the magnetism sensor 5 is disposed between the retainers 14a and 14b, the size of the apparatus can be further reduced as compared with Examples 1 and 2.

Preferably, the revolving speed detecting encoders are born by the side of the rim of the retainer. The both inner and outer edges of the rim protrude axially beyond the area to be detected.

In this arrangement, in whatever direction the retainers are displaced, the both inner and outer edges of the rim come in contact with other members disposed adj acent to the retainers before the rubbing of the area to be detected against the other members. As a result, it is assured that the area to be detected can be prevented from rubbing against the other members.

It is also preferred that one bearing ring of the stationary ring and the rotary ring be a member corresponding to outer ring, the other be a member corresponding to inner ring and the rolling elements be balls. The plurality of balls provided between a double row angular inner ring race formed on the outer surface of the member corresponding to inner ring and a double row angular outer ring race formed on the inner surface of the member corresponding to outer ring are provided with a back-to-back combination of contact angles.

In this arrangement, the load on a rolling bearing unit having a great bearing rigidity can be measured with a sufficient accuracy.

It is further preferred that a sensor for detecting rotary speed be provided for detecting the rotary speed of the rotary ring. The arithmetic logical unit calculates the radial load applied between the stationary ring and the rotary ring on the basis of the ratio of the rotary speed of the rotary ring to the sum of the revolving speed of one line of rolling elements and the other line of rolling elements.

In this arrangement, the radial load applied between the rotary ring and the stationary ring can be accurately determined regardless of variation of rotary speed of the rotary ring.

It is still further preferred that a sensor for detecting rotary speed be provided for detecting the rotary speed of the rotary. The arithmetic logical unit calculates the axial load applied between the stationary ring and the rotary ring on the basis of the ratio of the rotary speed of the rotary ring to the difference between the revolving speed of one line of rolling elements and the other line of rolling elements.

In this arrangement, the axial load applied between the rotary ring and the stationary ring can be accurately determined regardless of variation of rotary speed of the rotary ring. By calculating the axial load on the basis of the ratio of the revolving speed of the both lines, the axial load can be accurately determined even if the rotary speed of the rotary ring is not determined.

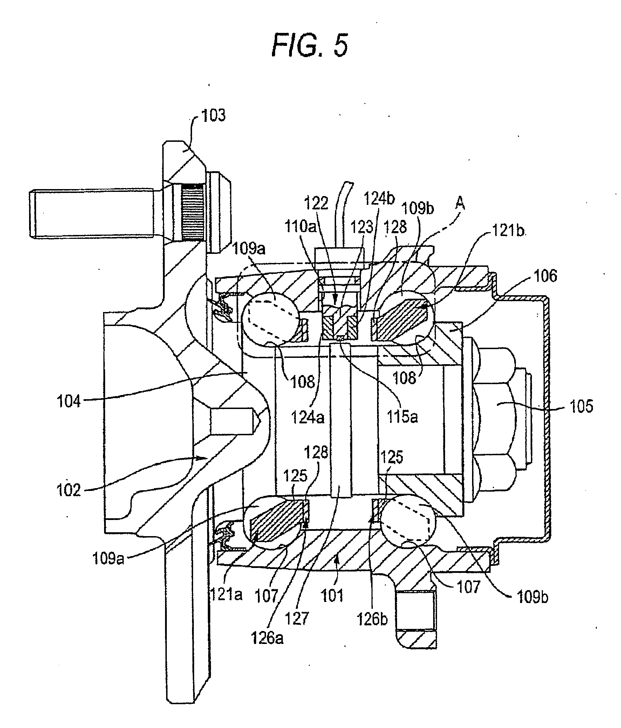

Figs. 5 to 10 shows Example 4 according to the invention. The present example concerns the case where the invention is applied to a rolling bearing unit load measuring apparatus for measuring the load (radial load and axial load) on a rolling bearing unit for bearing the follower wheel of automobile (front wheel for FR car, RR car and MR car and rear wheel for FF car). Since the configuration and action of the rolling bearing unit itself are the same as that of the related art structure shown in Fig. 13, the same parts as in Fig. 13 are given the same reference numerals and signs and their description will be omitted or simplified. The following description will be made focusing on the characteristics of the present example.

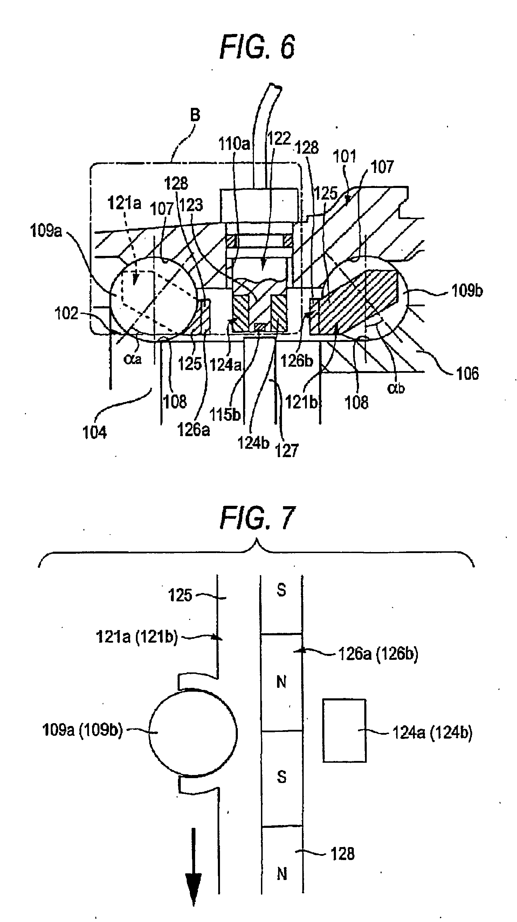

A plurality of rolling elements (balls) 109a, 109b are provided in a double row (two rows) rollably retained by retainers 121a, 121b, respectively, between double row angular inner ring races 108, 108 formed as rotary side race on the outer surface of a hub 102 which is a rotary ring as well as a member corresponding to inner ring and double row angular outer ring races 107, 107 formed as stationary ring on the inner surface of an outer ring 101 which is a stationary ring as well as a member corresponding to outer ring so that the hub 102 is rollably born by the inner side of the outer ring 101. In this arrangement, the lines of rolling elements 109a, 109b are provided with contact angles $\alpha a$, $\alpha b$ having the same magnitude but opposite directions (Fig. 6), respectively, to form a back-to-back combination type double row angular ball bearing. The lines of rolling elements 109a, 109b are given a pilot pressure to an extent such that it is not lost due to axial load applied during operation. During the operation of the rolling bearing unit having the aforementioned arrangement, the outer ring 101 is supported by and fixed to the suspension and a braking disc and a wheel are supported by and fixed to the rotary side flange 103 of the hub 102.

Amounting hole 110a is formed piercing radially through the outer ring 101 between the double row outer races 107, 107 at the axially middle portion of the outer ring 101 forming the rolling bearing unit. A sensor unit 122 is received in the mounting hole 110a extending from radially outside to inside the outer ring 101. A detecting portion 123 provided on the forward end of the sensor unit 122 protrudes beyond the inner surface of the outer ring 101. The detecting portion 123 is provided with a pair of revolving speed detecting sensors 124a, 124b and a rotary speed detecting sensor 115a.

Among these members, the revolving speed detecting sensors 124a, 124b are adapted to measure the revolving speed of the double row of rolling elements 109a, 109b. An area to be detected is provided on the detecting portion 123 on the both sides thereof in the axial direction of the hub 102 (crosswise direction in Figs. 5 and 6). In the case of the present example, the revolving speed detecting sensors 124a, 124b detect the revolving speed of the rolling elements 109a, 109b as rotary speed of the retainers 121a, 121b. To this end, in the case of the present example, the rim portions 125, 125 constituting the retainers 121a, 121b, respectively, are disposed opposed to each other. Annular revolving speed detecting encoders 126a, 126b are connected and fixed to the opposing surfaces of the rim portions 125, 125, respectively, over the entire circumference thereof.

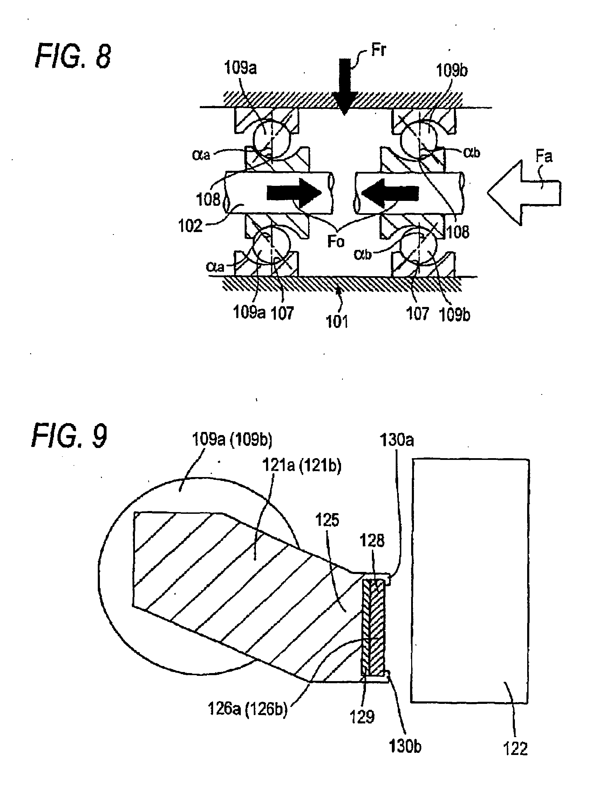

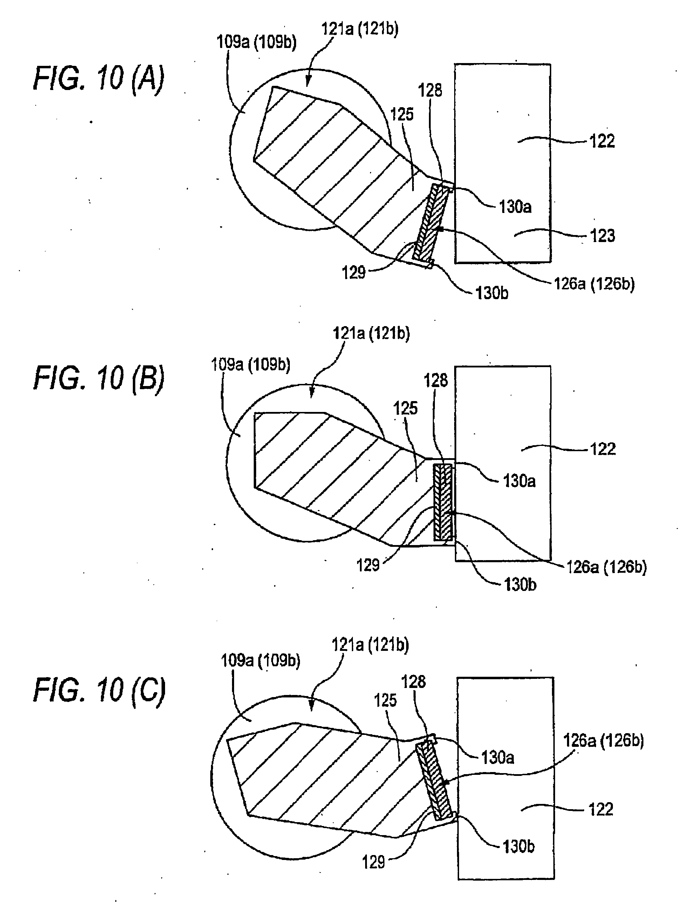

In the case of the present embodiment, the revolving speed detecting encoders 126a (126b) each are composed of an annular rubber magnet 128 having S poles and N poles disposed alternately at an equal interval on the axially one side thereof (right side as viewed in Figs. 9 and 10) and a back yoke 129 made of a magnetic material such as steel sheet vulcanization-bonded to the axially other side of the rubber magnet (left side as viewed in Figs. 9 and 10) as shown in Figs 9 and 10. The revolving speed detecting encoder 126a (126b) is inserted in the rim 125 provided at the axially one end of the retainer 121 a (121b) (right end as viewed in Fig. 9) during the injection molding of the retainer 121a (121b). In some detail, the rubber magnet 128 and the back yoke 129 are vulcanization-bonded to each other. The rubber magnet 128 is then axially magnetized. S and N poles are then alternately disposed on the axially one side of the rubber magnet 128 at an equal interval to form the revolving speeddetectingencoder 126a (126b). Thereafter, the revolving speed detecting encoder 126a (126b) is put in the cavity of a mold for injection-molding the retainer 121a (121b). A synthetic resin for forming the retainer 121a (121b) is then injected into the cavity at the position where the outer surface of the rim 125 (right surface as viewed in Fig. 9) is formed.

As a result, the revolving speed detecting encoder 126a (126b) is bonded and fixed to the outer surface of the rim 125, which is a part of the retainer 121a (121b). In this arrangement, the axially one side of the rubber magnet 128 is exposed at the radially middle portion of the outer surface of the rim 125. In the case of the present example, the rubber magnet 128 and the back yoke 129 have the same radial width. At the same time, pressing portions 130a, 130b having an L-shaped section formed on the both inner and outer edges of the outer surface of the rim 125 press the both inner and outer edges of the outer surface of the rubber magnet 128, which are areas to be detected. Accordingly, the forward end of both the pressing portions 130a, 130b protrude axially beyond the area of the rubber magnet 128 to be detected. In other words, the area of the rubber magnet 128 to be detected is present in a position lower than the both inner and outer edges of the rim 125.

In the case of the present example, the retainers 121a and 121b and the revolving speed detecting encoders 126a and 126b each are mechanically connected to each other by the engagement of both the pressing portions 130a, 130b with the both inner and outer edges of the outer surface of the rubber magnet 128 while the retainers 121a (121b) and the revolving speed detecting encodes 125a (126b) are connected and fixed to each other. Accordingly, sufficient durability and reliability of the connection of both the members 121a (121b) and 126a (126b) to themselves can be secured as compared with the case where these members are connected to each other merely with an adhesive. So far as the bonding strength with an adhesive can be sufficiently secured and the both inner and outer edges of the outer surface of the rim 125 protrude only for the purpose of lowering the level of the area of the rubber magnet 128 to be detected from the both inner and outer edges of the outer surface of the rim 125, an annular indentation having a greater depth than the thickness of the revolving speeddetecting encoder 126a (126b) may be formed on the radially middle portion of the outer surface of the rim 125 over the entire circumference thereof. In this case, the bonding (adhesion) of the retainers 121a (121b) and the revolving speed detecting encoders 126a (126b) to each other is conducted after the injection molding of the retainers 121a (121b).

Further, by using as a permanent magnet a rubber magnet made of a rubber having a high hardness or a plastic magnet to provide the permanent magnet with a sufficient rigidity, the back yoke can be omitted. Alternatively, the retainers 121a (121b) and the revolving speed detecting encoders 126a (126b) which have been separately prepared may be bonded to each other by pressing the revolving speed detecting encoders 126a (126b) into the gap between both the pressing portions 130a, 130b while both the pressing portions 130a, 130b are being elastically deformed. Anyway, the properties of the axially one side of the rubber magnet 128, which is an area to be detected of the revolving speed detecting encoders 126a (126b) bonded and fixed to the axially one end of the retainers 121a (121b), change alternately at an equal interval along the circumferential direction.

The detecting portion of the revolving speed detecting sensors 124a (124b) is disposed opposed to the axially one side of the rubber magnet 128 having the aforementioned arrangement with a measurement gap interposed therebetween as shown in Figs. 5 to 7 so that the rotary speed of the retainers 121a (121b) can be detected. The distance (measurement gap) between the area to be detected on the revolving speed detecting encoders 126a (126b) and the detecting portion of the revolving speed detecting sensors 124a, 124b is preferably from greater than the pocket gap which is the gap between the inner surface of the pocket of the retainers 121a, 121b and the rolling elements 109a, 109b to 2 mm or less. When the measurement gap is not greater than the pocket gap, it is disadvantageous in that the area to be detected and the detecting surface can more likely rug against with each other even when the retainers 121a, 121b make displacement only by the amount corresponding to the pocket gap. On the contrary, when the measurement gap exceeds 2 mm, it is made difficult to accurately measure the rotation of the revolving speed detecting encoders 126a, 126b using the revolving speed detecting sensors 124a, 124b.

On the other hand, the rotary speed detecting sensor 115a is adapted to measure the rotary speed of the hub 102, which is a rotary ring. A detecting surface is disposed on the forward end of the detecting portion 123, i.e., the radially inner end of the outer ring 101. Further, a cylindrical rotary speed detecting encoder 127 is fitted on the middle portion of the hub 102 between the double row inner ring races 108, 108. The detecting surface of the rotary speed detecting sensor 115a is disposed opposed to the outer surface of the rotary speed detecting encoder 127, which is to be detected. The properties of the area to be detected on the rotary speed detecting encoder 127 change alternately at an equal interval along the circumferential direction so that the rotary speed of the hub 102 can be detected by the rotary speed detecting sensor 115a. The measurement gap between the outer surface of the rotary speed detecting encoder 127 and the detecting surface of the rotary speed detecting sensor 115a, too, is predetermined to be 2 mm or less.

As the revolving speed detecting sensors 124a, 124b and the rotary speed detecting sensor 115a, all of which are a sensor for detecting rotary speed, there are used magnetic rotary speed detecting sensors. As such a magnetic rotary speed detecting sensor there is preferably used an active sensor comprising a magnetism detecting element such as hall element, hall IC, magnetic resistance element (MR element, GMR element) and M1 element incorporated therein. In order to form an active rotary speed detecting sensor comprising such a magnetism detecting element incorporated therein, one side of the magnetism detecting element is brought into contact with one end of the permanent magnet along the magnetization direction thereof directly or with a stator made of a magnetic material interposed therebetween (in the case where an encoder made of a magnetic material is used) while the other side of the magnetism detecting element is disposed opposed to the area to be detected on the encoders 126a, 126b, 127 directly or with a stator made of a magnetic material interposed therebetween. In the case of the present example, since an encoder made of permanent magnet is used, the permanent magnet is not needed on the sensor side.

In the case of the apparatus for measuring the load on a rolling bearing unit of the present example, the detection signal from the sensors 124a, 124b, 115a are inputted to an arithmetic logical unit which is not shown. Then, the arithmetic logical unit calculates either or both of the radial load and the axial load applied between the outer ring 101 and the hub 102 on the basis of detection signal fed by the sensors 124a, 124b, 115a. For example, in the case where the radial load is determined, the arithmetic logical unit determines the sum of the revolving speed of the lines of rolling elements 109a, 109b detected by the revolving speed detecting sensors 124a, 124b and then calculates the radial load on the basis of the ratio of the rotary speed of the hub 102 detected by the rotary speed detecting sensor 115a to the sum thus determined. Further, the aforementioned axial load is calculated on the basis of the ratio of the rotary speed of the hub 102 detected by the rotary speed detecting sensor 115a to the difference between the revolving speed of the lines of rolling elements 109a, 109b detected by the revolving speed detecting sensors 124a, 124b, respectively. This will be further described in connection with Fig. 8. The following description will be made on the supposition that the contact angle $\alpha a$, $\alpha b$ of the lines of rolling elements 109a, 109b are the same with each other while the axial load Fa is not applied.

Fig. 8 illustrates a typical example of the rollingbearing unit for wheel bearing shown in Fig. 5 and how the load acts on the rolling bearing unit. Rolling elements 109a, 109b disposed in two lines between double row inner ring races 108, 108 and double row outer ring races 107, 107 are given pilot pressures Fo, Fo, respectively. During operation, the weight of the vehicle, etc. cause the radial load Fr to be applied to the rolling bearing unit. Further, the centrifugal force, etc. developed during vehicle turning cause the axial load Fa to be applied to the rolling bearing unit. All the pilot pressures Fo, Fo, the radial load Fr and the axial load Fa have effects on the contact angle $\alpha$ ($\alpha a$, $\alpha b$) of the lines of rolling elements 109a, 109b. When the contact angle $\alpha a$, $\alpha b$ changes, the revolving speed nc of the rolling elements 109a, 109b changes. Supposing that the pitch diameter of the rolling elements 109a, 109b is D, the diameter of the rolling elements 109a, 109b is d, the rotary speed of the hub 102 on which the inner ring races 108, 108 are provided is ni, and the rotary speed of the outer ring 101 on which the outer ring races 107, 107 are provided is no, the revolving speed nc is represented by the following equation (1):

$$nc = (1 - (d \cdot \cos\alpha/D) \cdot (ni/2)) + (1 + (d \cdot \cos\alpha/D) \cdot (no/2))$$
$$\ldots (1)$$

As can be seen in the equation (1), the revolving speed nc of the rolling elements 109a, 109b changes depending on the change of the contact angle $\alpha$ ($\alpha a$, $\alpha b$) of the rolling elements 109a, 109b. As mentioned above, however, the contact angle $\alpha a$, $\alpha b$ changes depending on the radial load Fr and the axial load Fa. Therefore, the revolving speed nc changes in accordance with the radial load Fr and axial road Fa. In the case of the present example, since the hub 102 rotates and the outer ring 101 does not rotate, the revolving speed nc decreases as the radial load F increases. Further, referring to the axial load Fa, the revolving speed of the line bearing the axial load Fa increases while the revolving speed of the line which does not bear the axial load Fa decreases. Accordingly, the radial load Fr and the axial load Fa can be determined on the basis of the revolving speed nc.

However, the contact angle $\alpha$ related to the change of the revolving speed nc changes not only while the radial load Fr and the axial load Fa are associated with each other but also with the pilot pressure Fo, Fo. Further, the revolving speed nc changes in proportion to the rotary speed ni of the hub 102. Therefore, the revolving speed nc cannot be accurately determined unless the radial load Fr, axial load Fa, pilot pressures Fo, Fo, and the rotary speed ni of the hub 102 are considered in association with each other. Among these factors, the pilot pressures Fo, Fo do not change with the operational conditions. Therefore, the effect of the pilot pressures Fo, Fo can be easily eliminated by initial predetermination, etc. On the contrary, the radial load Fr, the axial load Fa and the rotary speed ni of the hub 102 change always with the operational conditions. Therefore, their effect cannot be eliminated by initial predetermination, etc.

Under these circumstances, in the present example, as previously mentioned, in the case where the radial load Fr is determined, the effect of the axial load Fa is reduced by determining the sum of the revolving speed of the lines of rolling elements 109a, 109b detected by the revolving speed detecting sensors 124a, 124b, respectively. Further, in the case where the axial load Fa is determined, the effect of the radial load Fr is reduced by determining the difference between the revolving speed of the lines of rolling elements 109a, 109b. Moreover, in any case, the effect of the rotary speed ni of the hub 102 is eliminated by calculating the radial load Pr or the axial load Fa on the basis of the ratio of the rotary speed ni of the hub 102 detected by the rotary speed detecting sensor 115a to the sum or difference thus determined. However, in the case where the axial load Fa is calculated on the basis of the ratio of the revolving speed of the lines of rolling elements 109a, 109b, the rotary speed Ni of the hub 102 is not necessarily required.

There are other various methods for calculating either or both of the radial load Fr and the axial load Fa on the basis of the signal from the revolving speed detecting sensors 124a, 124b. However, these methods are described in detail in the previously cited Japanese Patent Application Nos. 2003-171715 and 2003-172483 and have nothing to do with the essence of the invention. Thus, detailed description of these methods will be omitted.

During the operation of the apparatus for measuring the load on a rolling bearing unit having the aforementioned arrangement, it is likely that the retainers 121a, 121b can make displacement from the standard state shown in Fig. 9 to the state shown exaggeratedly in Figs. 10 (A) to (C) due to the presence of the pocket gap. Since the measurement gap between the area to be detected on the revolving speed detecting encoders 126a, 126b and the detecting portion of the revolving speed detecting sensors 124a, 124b is narrow as previously mentioned, the area to be detected can rub against the sensor unit 122 having the detecting portion provided thereon if no countermeasures are taken. On the contrary, in the case of the present example, as previously mentioned, the forward end of both the pressing portions 130a, 130b protrude axially beyond the area to be detected on the rubber magnet 128 forming the revolving speed detecting encoders 126a, 126b, and the area to be detected on the rubber magnet 128 is present in an indentation. In this arrangement, as shown in Figs. 10 (A) to (C), in whatever direction the retainers 121a, 121b are displaced, the area to be detected and the sensor unit 122 cannot rub against each other.

As a result, the exfoliation of powdered or microfibrous ferromagnetic material that then contaminates the grease can be prevented, making it possible to secure desired durability of the rolling bearing unit lubricated by the grease and desired precision in the measurement of load. Although both the pressing portions 130a, 130b and the holder of the sensor unit 122 can be worn when rubbed against each other, the resulting powder cannot damage the rolling contact portion even if it enter the contact portion because these are all made of soft synthetic resin. Further, both the pressing portions 130a, 130b and the holder of the sensor unit 122 rarely rub against each other (Even when they rub against each other, the abrasion loss is extremely small because the contact pressure at the rubbing portion is low enough. Thus, no problems can occur with the durability of the retainers 121a, 121b and the sensor unit 122.). Moreover, the powder produced by the abrasion of the synthetic resin does not deteriorate the detecting precision of the revolving speed detecting sensors 124a, 124b and the revolving speed detecting sensor 115a.

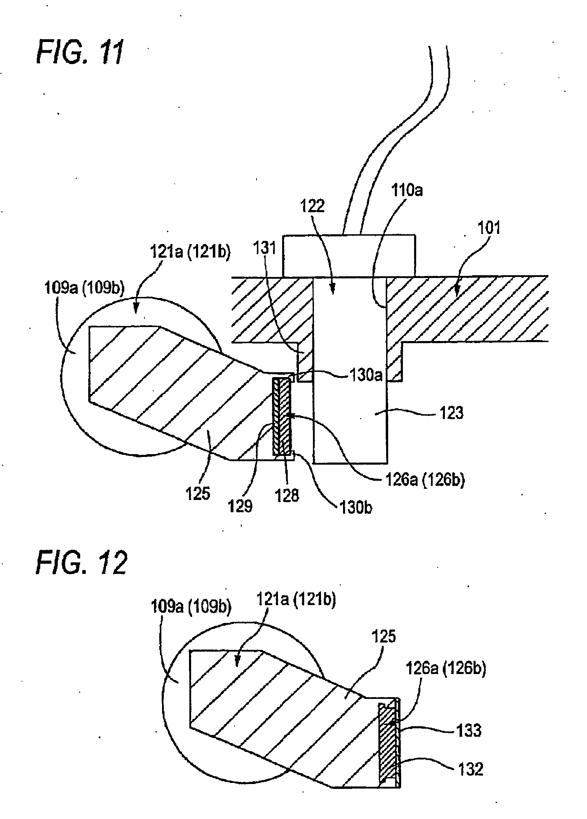

Fig. 11 shows Example 5 according to the invention. In the case of the present example, a protrusion 131 is formed on the edge of the opening of a mounting hole 110a piercing the sensor unit 122 on the inner surface of the outer ring 101. It is also arranged such that when the retainers 121a (121b) make displacement, the forward end of the pressing portion 130a formed on the periphery of the retainers 121a (121b) comes in contact with the protrusion 131. In this arrangement, the holder of the sensor unit 122 made of synthetic resin can be prevented from rubbing against the pressing portion 130a to abrasion. Other configurations and actions are the same as that of Example 4 described above and duplicated illustration and description will be omitted.

Fig. 12 illustrates a comparative Example 6 not according to the invention. In the case of the present example, the revolving speed detecting encoders 126a (126b) are formed by injection molding in an indentation 132 formed on the axially one side of the retainers 121a (121b) (right side as viewed in Fig. 12), i.e., over the entire circumference of the outer surface (right side as viewed in Fig. 12) of the rim 125 constituting the retainers 121a (121b). The indentation 132 is in the form of ant's nest having a small radial width at opening but a larger radial width toward the bottom thereof and is formed at the same time with the injection molding of the retainers 121a (121b).

The revolving speed detecting encoders 126a (126b) are formed by injecting a rubber or synthetic resin having a powdered or microfibrous magnetic material incorporated therein into the indentation 132 while the retainers 121a (121b) which have been injection-molded are set in another mold. By axially magnetizing the revolving speed detecting encoders 126a (126b) after the solidification of the rubber or synthetic resin in the indentation 132, an annular rubber or plastic magnet having S and N poles alternately arranged at an equal interval on the outer surface thereof which is an area to be detected is formed. In the case of the present example, no back yoke is provided.

In the case of the present example, since the magnetization of the revolving speed detecting encoders 126a (126b) is conducted after the injection of the rubber or synthetic resin having a powdered or microfibrous magnetic material incorporated therein into the indentation 132, the area to be detected on the revolving speed detecting encoders 126a (126b) and the axially one side of the retainers 121a (121b) are positioned on the same plane. Accordingly, under these conditions, it is likely that the area to be detected and the sensor unit 122 can rub against each other with the displacement of the retainers 121a (121b). Therefore, in the case of the present example, the area to be detected is covered by a protective film 133. As such a protective film 133 there is used a thin film of nonmagnetic material such as coated film of synthetic resin and nickel deposit.

In the case of the present example, the area to be detected on the revolving speed detecting encoders 126a (126b) is covered by the protective film 133 so that the area to be detected can be prevented from rubbing directly against the sensor unit 122 disposed adjacent to the retainers 121a (121b) (see Figs. 5, 6 and 9 to 11). Accordingly, powdered or microfibrous ferromagnetic material cannot be exfoliated from the area to be detected.

In the above example, as the permanent magnet, there may be used a rubber magnet and a back yoke made of magnetic material be vulcanization-bonded to the axially other side of the rubber magnet.

In this arrangement, a rubber magnet which can be prepared at a low cost can be used and the revolving speed detecting encoders can be provided with a sufficient rigidity to provide a sufficient bonding strength of the revolving speed detecting encoders with the retainers.

In the above example, it is preferred that one of the stationary ring and the rotary ring be a member corresponding to outer ring, the other be a member corresponding to inner ring and the rolling elements each be a ball. A plurality of balls provided between a double row angular inner ring race formed on the outer surface of the member corresponding to inner ring and a double row angular outer ring race formed on the inner surface of the member corresponding to outer ring are given back-to-back combination contact angle.

In this arrangement, the precision in measurement of load on a rolling bearing unit having a great bearing rigidity can be enhanced even when the variation of revolving speed of the lines of rolling elements with the variation of load rises.

It is also preferred that a rotary speed detecting sensor for detecting the rotary speed of the rotary ring be provided. The arithmetic logical unit calculates the radial load applied between the stationary ring and the rotary ring on the basis of the ratio of the rotary speed of the rotary ring to the sum of the revolving speed of one line of rolling elements and the other line of rolling elements.

In this arrangement, the radial load applied between the rotary ring and the stationary ring can be accurately determined regardless of the variation of the rotary speed of the rotary ring.

It is further preferred that a rotary speed detecting sensor for detecting the rotary speed of the rotary ring be provided. The arithmetic logical unit calculates the axial load applied between the stationary ring and the rotary ring on the basis of the ratio of the rotary speed of the rotary ring to the difference between the revolving speed of one line of rolling elements and the other line of rolling elements.

In this arrangement, the radial load applied between the rotary ring and the stationary ring can be accurately determined regardless of the variation of the rotary speed of the rotary ring.

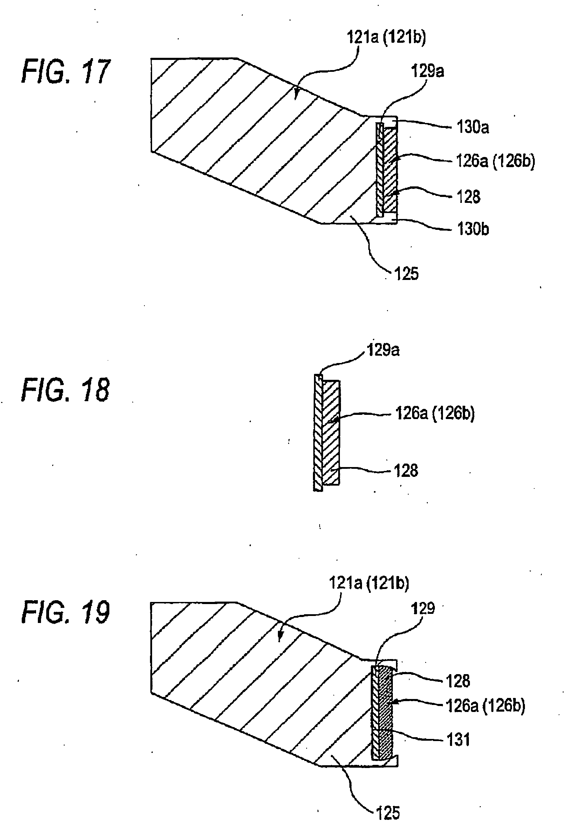

Figs. 17 and 18 illustrate Example 5 according to the invention. In the case of the present example, the radial width of the back yoke 129a constituting the revolving speed detecting encoders 126a (126b) is greater than the radial width of the rubber magnet 128 and the both inner and outer edges of the back yoke 129a protrude axially beyond the both inner and outer edges of the rubber magnet 128. The axially one side of the rubber magnet 128 (right side as viewed in Figs. 17 and 18) is disposed flush with the outer surface of the rim 125 with the revolving speed detecting encoders 126a (126b) enclosed in the outer surface (right side as viewed in Fig. 17) of the rim 125 of the retainers 121a (121b). In the case of the present example, even when the revolving speed detecting encoders 126a (126b) and the retainers 121a (121b) have been bonded and fixed to each other, respectively, the forward end of the magnetized yoke can be brought into contact with the axially one side of the rubber magnet 128. Accordingly, the magnetization of the rubber magnet 128 may not necessarily be effected before being bonded and fixed to the retainers 121a (121b) but maybe effected after that. Other configurations and actions are the same as that of Example 4 described above and illustration and description of the same parts will be omitted.

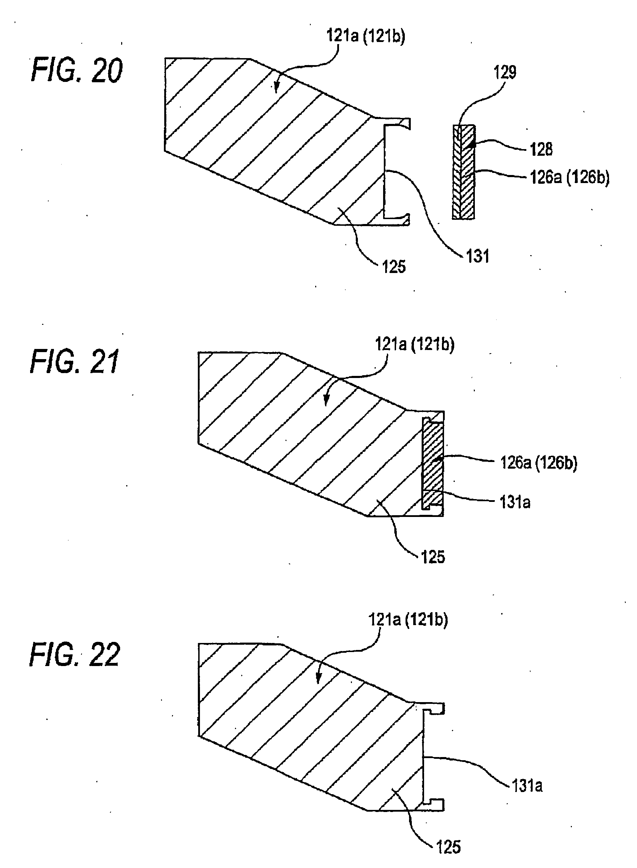

Figs. 19 and 20 illustrate Example 6 according to the invention. The configuration of the revolving speed detecting encoders 126a (126b) constituting the present example is the same as described in Example 4 as mentioned above and the annular rubber magnet 128 and the back yoke 129 having the same radial width are vulcanization-bonded and fixed to each other. In particular, in the case of the present example, an indentation 131 is formed on the entire circumference of the outer surface (right side as viewed in Fig. 19) of the rim 125 which is the axially one side of the retainers 121a (121b) at the time of injection molding of the retainer 121a (121b).

The radial width of the indentation 131 at the opening thereof is smaller than the width of the revolving speed detecting encoders 126a (126b). The radial width of the indentation 131 at a portion deeper than the opening thereof is the same as the width of the revolving speed detecting encoders 126a (126b). The axial dimension of the deep portion is the same as the axial thickness of the revolving speed detecting encoders 126a (126b). In order to bond and fix the revolving speeddetectingencoders 126a (126b) to the retainers 121a (121b) having the indentation 131, the revolving speed detecting encoders 126a (126b) are pressed into the indentation 131 while elastically raising the width dimension of the opening of the indentation 131. When the revolving speed detecting encoders 126a (126b) are pressed into the indentation 131 until the back yoke 129 constituting the revolving speed detecting encoders 126a (126b) is brought into contact with the bottom surface of the indentation 131, the width dimension of the opening of the indentation 131 is elastically reduced. As a result, the revolving speed detecting encoders 126a (126b) cannot be pulled out of the indentation 131, making it assured that the revolving speed detecting encoders 126a (126b) can be bonded and fixed to the retainers 121a (121b). In order to further enhance the bonding strength of both the members 121a (121b) and 126a (126b) with each other, respectively, the back yoke 129 and the bottom surface of the indentation 131 may be bonded to each other. It is useful to prevent the encoders 126a (126b) from circumferentially rotating in the indentation 131 by utilizing adhesion or other methods. This can apply also to Examples 4 and 5 as mentioned above. Other configurations and actions are the same as that of Example 4 described above and illustration and description of the same parts will be omitted.

Figs. 21 and 22 illustrate a comparative Example 7 not according to the invention. In the case of the present example, the revolving speed detecting encoders 126a (126b) are provided by injection molding in the indentation 131a formed on the entire circumference of the axially one side (right side as viewed in Figs. 21 and 22) of the retainers 121a (121b), i.e., the outer surface (right side as viewed in Figs. 21 and 22) of the rim 125 constituting the retainers 121a (121b). Theindentation 131a is in the form of ant's nest having a small radial width at opening but a larger radial width toward the bottom thereof and is formed at the same time with the injection molding of the retainers 121a (121b).

The revolving speed detecting encoders 126a (126b) are formed by injecting a rubber or synthetic resin having a powdered or microfibrous magnetic material incorporated therein into the indentation 131a while the retainers 121a (121b) which have been injection-molded are set in another mold. By axially magnetizing the revolving speed detecting encoders 126a (126b) after the solidification of the rubber or synthetic resin in the indentation 131a, an annular rubber or plastic magnet having S and N poles alternately arranged at an equal interval on the outer surface thereof which is an area to be detected is formed. In the case of the present example, no back yoke is provided.

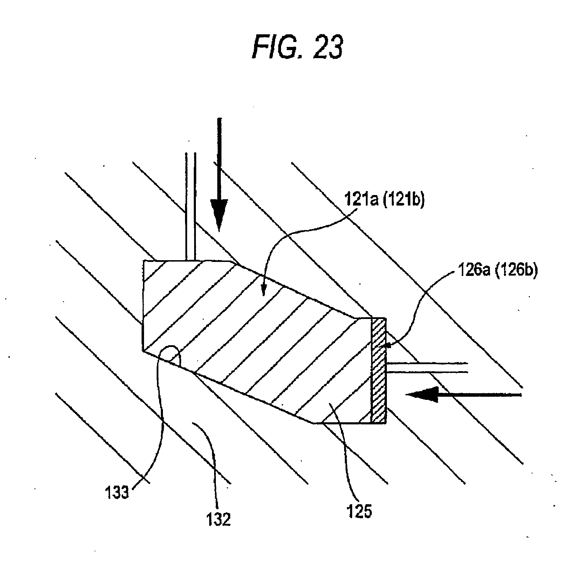

Fig. 23 illustrates a comparative Example 8 not according to the invention. In the case of the present example, too, the revolving speed detecting encoders 126a (126b) each are an annular plastic magnet having S and N poles alternately arranged at an equal interval on the axially one side thereof. In particular, in the case of the present example, the plastic magnet comprises a powdered or microfibrous magnetic material incorporated in the same synthetic resin as that constituting the retainers 121a (121b). The revolving speed detecting encoders 126a (126b) are injection-molded on the outer surface of the rim 125, which is the axially one end of the retainers 121a (121b), at the same time with the injection molding of the retainers 121a (121b) so that they are bonded and fixed to the outer surface of the rim 125.

To this end, a synthetic resin having a powdered or microfibrous magnetic material is injected into the cavity 133 of a mold 132 for the injection molding of the retainers 121a (121b) from the axially one end thereof while a synthetic resin free of powdered or microfibrous magnetic material is injected into the mold 132 from the axially other end thereof. The synthetic resins which have been injected from the respective side of the mold are then welded to each other to form the retainers 121a (121b) having the revolving speed detecting encoders 126a (126b) provided integrally therewith, respectively. The magnetization of the revolving speed detecting encoders 126a (126b) is effected after injection molding.

## Industrial Applicability

As mentioned above, in accordance with the invention, the retainer has a back yoke-forming member and an annular magnet mounted integrally thereon, making it possible to reduce the size of the apparatus as compared with the case where the annular magnet is disposed on other sites in the bearing and easily raise the resolution in the related art method for detecting the passing velocity of rolling elements.

Further, in accordance with the invention, the density of magnetic flux toward the magnetism sensor is raised, making it possible to provide a relatively great air gap between the magnet and the sensor. Thus, the tolerance in production can be raised, making it possible to provide a sufficient margin of precision in members and assembly.

Further, the back yoke-forming member eliminates leakage of magnetism, making it possible to prevent any adverse effects on other devices and mechanisms.

The invention can be used not only for rolling bearing unit loadmeasuring apparatus for measuring the load on a rolling bearing unit for bearing the wheel of automobile as described in the aforementioned examples but also to determine the load acting on machine tools, industrial machines and rotary mechanical devices.

The invention can be used not only for rolling bearing unit load measuring apparatus for measuring the load on a rolling bearing unit for bearing the wheel of automobile as described in the aforementioned examples but also to determine the load acting on machine tools, industrial machines and rotary mechanical devices.

## Claims

1. A rotary device comprising:

   a main body (4);
   a rolling bearing (2, 3) attached to the main body (4), the rolling bearing (2, 3) including an inner ring (2b, 3b), an outer ring (2a, 3a) and a retainer (10) rollably retaining rolling elements (7);
   an annular magnet (8) having a multipolar magnetization;
   a back yoke-forming member (11); and
   a magnetism sensor (5) disposed on the main body (4);

   wherein the annular magnet (8) and the back yoke-forming member (11) are integrally provided on the retainer (10) and disposed opposed to the magnetism sensor (5) separated by a predetermined distance,
   **characterized in that**,
   said retainer (10) is made of a nonmagnetic material;
   the back yoke-forming member includes an annular member made of a magnetic material;
   said annular member (11) is fixed on a side of the retainer (10); and
   said annular magnet (8) is laid and fixed on a surface of the annular member (11).

2. The rotary device as claimed in claim 1, wherein the annular magnet includes a plastic magnet.

3. The rotary device as claimed in claim 1, further comprising: a load detector that detects load on the rolling bearing by measuring a rotary speed of the retainer.

4. A manufacturing method of a rotary device, wherein the rotary device includes a main body (4), a rolling bearing (2, 3) attached to the main body (4), the rolling bearing (2, 3) including an inner ring (2b, 3b), an outer ring (2a, 3a) and a retainer (10) rollably retaining rolling elements (7), an annular magnet having a multipolar magnetization, a back yoke-forming member (11) including an annular member, and a magnetism sensor disposed on the main body (4) ; the method comprising :

fixing the annular member made of a magnetic material on a side of the retainer made of nonmagnetic material;
fixing the annular magnet on a surface of the annular member; and
then performing a multipolar magnetization of the annular magnet.

5. A manufacturing method of a rotary device, wherein the rotary device includes a main body (4), a rolling bearing (2, 3) attached to the main body (4), the rolling bearing (2, 3) including an inner ring (2b, 3b), an outer ring (2a, 3a) and a retainer (10) rollably retaining rolling elements (7), an annular magnet having a multipolar magnetization, a back yoke-forming member (11) including an annular member, and a magnetism sensor disposed on the main body (4); the method comprising :

fixing the annular member made of a magnetic material on a side of the retainer (10) made of nonmagnetic material by means of an insert molding; and
fixing the annular magnet made of a plastic magnet on a surface of the annular member by means of two-color molding.


**Patentansprüche**

1. Drehvorrichtung, die umfasst:

einen Hauptkörper (4);
ein Wälzlager (2, 3), das an dem Hauptkörper (4) angebracht ist, wobei das Wälzlager (2, 3) einen inneren Ring (2b, 3b), einen äußeren Ring (2a, 3a) und einen Käfig (10) enthält, der Wälzelemente (7) wälzbar aufnimmt;
einen ringförmigen Magneten (8), der eine mehrpolige Magnetisierung aufweist;
ein ein hinteres Joch bildendes Element (11); und
einen Magnetsensor (5), der an dem Hauptkörper (4) angeordnet ist;

wobei der ringförmige Magnet (8) und das das hintere Joch bildende Element (11) integral an dem Käfig (10) vorgesehen sind und dem Magnetsensor (5) um eine vorgegebene Strecke beabstandet gegenüberliegend angeordnet sind;
**dadurch gekennzeichnet, dass**
der Käfig (10) aus einem nichtmagnetischen Material besteht;
das das hintere Joch bildende Element ein ringförmiges Element enthält, das aus einem magnetischen Material besteht;
das ringförmige Element (11) an einer Seite des Käfigs (10) befestigt ist; und
der ringförmige Magnet (8) an einer Fläche des ringförmigen Elementes (11) aufliegt und befestigt ist.

2. Drehvorrichtung nach Anspruch 1, wobei der ringförmige Magnet einen Kunststoffmagneten enthält.

3. Drehvorrichtung nach Anspruch 1, die des Weiteren umfasst:

einen Lastdetektor, der auf das Wälzlager wirkende Last durch Messen einer Drehgeschwindigkeit des Käfigs erfasst.

4. Verfahren zum Herstellen einer Drehvorrichtung, wobei die Drehvorrichtung einen Hauptkörper (4);
ein Wälzlager (2, 3), das an dem Hauptkörper (4) angebracht ist, wobei das Wälzlager (2, 3) einen inneren Ring (2b, 3b), einen äußeren Ring (2a, 3a) und einen Käfig (10) enthält, der Wälzelemente (7) wälzbar aufnimmt;
einen ringförmigen Magneten (8), der eine mehrpolige Magnetisierung aufweist;
ein ein hinteres Joch bildendes Element (11), das ein ringförmiges Element umfasst; und
einen Magnetsensor (5), der an dem Hauptkörper (4) angeordnet ist, enthält und das Verfahren umfasst:

Befestigen des ringförmigen Elementes, das aus einem magnetischen Material besteht, an einer Seite des Käfigs, der aus nichtmagnetischem Material besteht;
Befestigen des ringförmigen Magneten an einer Fläche des ringförmigen Elementes; und
dann Durchführen einer mehrpoligen Magnetisierung des ringförmigen Magneten.

**5.** Verfahren zum Herstellen einer Drehvorrichtung, wobei die Drehvorrichtung einen Hauptkörper (4);
ein Wälzlager (2, 3), das an dem Hauptkörper (4) angebracht ist, wobei das Wälzlager (2, 3) einen inneren Ring (2b, 3b), einen äußeren Ring (2a, 3a) und einen Käfig (10) enthält, der Wälzelemente (7) wälzbar aufnimmt;
einen ringförmigen Magneten (8), der eine mehrpolige Magnetisierung aufweist;
ein ein hinteres Joch bildendes Element (11), das ein ringförmiges Element umfasst; und
einen Magnetsensor (5), der an dem Hauptkörper (4) angeordnet ist, enthält und das Verfahren umfasst:

Befestigen des ringförmigen Elementes, das aus einem magnetischen Material besteht, an einer Seite des Käfigs (10), der aus nichtmagnetischem Material besteht, mittels eines Umspritzvorgangs (insert molding); und
Befestigen des ringförmigen Magneten, der aus einem Kunststoffmagneten besteht, an einer Fläche des ringförmigen Elementes mittels Zweifarben-Spritzgießen (two-color molding).

## Revendications

**1.** Dispositif tournant comprenant :

un corps principal (4) ;
un palier à roulement (2, 3) fixé sur le corps principal (4), le palier à roulement (2, 3) incluant une bague intérieure (2b, 3b), une bague extérieure (2a, 3a) et une cage (10) retenant de façon à ce qu'ils roulent des éléments roulants (7) ;
un aimant annulaire (8) ayant une magnétisation multipolaire ;
un élément formant chape arrière (11) ; et
un capteur magnétique (5) disposé sur le corps principal (4) ;

dans lequel l'aimant annulaire (8) et l'élément formant chape arrière (11) sont placés d'un seul bloc sur la cage (10) et disposés opposés au capteur magnétique (5) séparés par une distance prédéterminée,
**caractérisé en ce que**
ladite cage (10) est faite d'un matériau non magnétique ;
l'élément formant chape arrière inclut un élément annulaire fait d'un matériau magnétique ;
ledit élément annulaire (11) est fixé sur un côté de la cage (10) ; et
ledit aimant annulaire (8) est posé et fixé sur une surface de l'élément annulaire (11).

**2.** Dispositif tournant selon la revendication 1, dans lequel l'aimant annulaire inclut un aimant plastique.

**3.** Dispositif tournant selon la revendication 1, comprenant en outre : un détecteur de charge qui détecte la charge sur le palier à roulement en mesurant une vitesse de rotation de la cage.

**4.** Procédé de fabrication d'un dispositif tournant, dans lequel le dispositif tournant inclut un corps principal (4), un palier à roulement (2, 3) fixé sur le corps principal (4), le palier à roulement (2, 3) incluant une bague intérieure (2b, 3b), une bague extérieure (2a, 3a) et une cage (10) retenant de façon à ce qu'ils roulent des éléments roulants (7), un aimant annulaire ayant une magnétisation multipolaire, un élément formant chape arrière (11) incluant un élément annulaire, et un capteur magnétique disposé sur le corps principal (4) ; le procédé comprenant de :

fixer l'élément annulaire fait d'un matériau magnétique sur un côté de la cage faite d'un matériau non magnétique ;
fixer l'aimant annulaire sur une surface de l'élément annulaire ; et
réaliser alors une magnétisation multipolaire de l'aimant annulaire.

**5.** Procédé de fabrication d'un dispositif tournant, dans lequel le dispositif tournant inclut un corps principal (4), un palier à roulement (2, 3) fixé sur le corps principal (4), le palier à roulement (2, 3) incluant une bague intérieure (2b, 3b), une bague extérieure (2a, 3a) et une cage (10) retenant de façon à ce qu'ils roulent des éléments roulants (7), un aimant annulaire (8) ayant une magnétisation multipolaire, un élément formant chape arrière (11) incluant un élément annulaire, et un capteur magnétique disposé sur le corps principal (4) ; le procédé comprenant de :

fixer l'élément annulaire fait d'un matériau magnétique sur un côté de la cage (10) faite d'un matériau non magnétique au moyen d'un moulage par insert ; et
fixer l'aimant annulaire fait d'un aimant plastique sur une surface de l'élément annulaire au moyen d'un moulage bicolore.

# FIG. 1

FIG. 2

FIG. 3

FIG. 4

# FIG. 5

## FIG. 6

## FIG. 7

## FIG. 8

## FIG. 9

FIG. 10 (A)

121a (121b)
109a (109b)
125
128
122
130a
123
129
130b
126a (126b)

FIG. 10 (B)

121a (121b)
109a (109b)
125
128
122
130a
129
130b
126a (126b)

FIG. 10 (C)

121a (121b)
109a (109b)
125
128
126a (126b)
130a
122
129
130b

*FIG. 11*

*FIG. 12*

# FIG. 13

## FIG. 14

*FIG. 15*

121a (121b)

129

130a

126a (126b)

128

130b

125

*FIG. 16*

129

126a (126b)

128

*FIG. 17*

121a (121b)
129a
130a
126a (126b)
128
130b
125

*FIG. 18*

129a
126a (126b)
128

*FIG. 19*

121a (121b)
129
128
126a (126b)
131
125

FIG. 20

FIG. 21

FIG. 22

## FIG. 23

## REFERENCES CITED IN THE DESCRIPTION

**Patent documents cited in the description**

- GB 2382142 A
- JP 2001033469 A
- JP 2001021577 A
- JP 3209016 A
- JP 62003365 B
- JP 2003171715 A
- JP 2003172483 A